# DEMANDE DE BREVET EUROPEEN

(11) **EP 2 051 349 A1**
(43) Date de publication de la demande: **22.04.2009**
(21) Numéro de dépôt: 08017788.4
(22) Date de dépôt: 10.10.2008
(51) Int. Cl.: H02J 9/06

(54) **Dispositif de maintien d`alimentation d`appareils électriques**

(30) Priorité: 11.10.2007 FR 0707135
(71) Demandeur: Annecy Electronique, 74650 Chavanod (FR)
(72) Inventeur: Sorlin, Stéphane, 74410 Saint Jorioz (FR)
(74) Mandataire: Gasquet, Denis

(57) **Abrégé**

Dispositif de maintien d'alimentation (1) destiné à maintenir alimentés des équipements qui sont branchés sur un réseau électrique alimentation en courant continu, sur lequel est aussi raccordé d'autres équipements électriques tels que des démarreurs de moteurs thermiques ou tout autre consommateur mettant en oeuvre de forts courants électriques et générant des chutes de tension importante., caractérisé en ce qu'il comprend un circuit électronique (2) comprenant au moins un dispositif anti-retour (8) et un élévateur de tension (6).

## Description

La présente invention concerne un dispositif de maintien d'alimentation d'appareils électriques.

Elle concerne plus particulièrement, un dispositif destiné à maintenir alimentés les appareils qui sont branchés sur une alimentation électrique en courant continu de tension inférieure à 50 volts, sur lequel est aussi raccordé d'autres équipements électriques tels que des démarreurs de moteurs thermiques ou tout autre consommateur mettant en oeuvre de forts courants électriques et générant des chutes de tension importante.

Dans les bateaux, les véhicules terrestres ou les aéronefs, lors du démarrage d'un moteur ou lors de la mise sous tension d'un gros consommateur électrique, il peut se produire sur le réseau électrique une chute de tension plus ou moins importante qui peut arrêter momentanément le fonctionnement, faire perdre la mémoire, ou figer l'utilisation d'autres appareils électriques raccordés sur le même réseau électrique, tels que par exemple sondeurs sur un bateau, radio, GPS, centrale de navigation, et autres....

Lorsque la tension d'un réseau électrique, lors d'un appel de courant, passe en dessous du seuil de la tension d'alimentation minimum d'un équipement, cet équipement peut être « arrêtée », « remis à zéro » ou « planté », ce qui est un inconvénient important car les données et les réglages sont perdus, et cela peut provoquer la destruction pure et simple de l'équipement.

Le but de la présente invention est de résoudre les inconvénients cités précédemment en maintenant aux bornes de l'équipement une tension minimale qui évite «l'arrêt», « la remise à zéro » de cet équipement l'équipement.

Ainsi le dispositif de l'invention est installé en amont de l'équipement.

Selon une caractéristique de l'invention, l'élévateur de tension et l'unité de surveillance sont reliés au circuit de masse.

D'autres caractéristiques et avantages de l'invention se dégageront de la description qui va suivre en regard des dessins annexés qui ne sont donnés qu'à titre d'exemples non limitatifs. ,
La figure 1 est une vue en perspective extérieure du dispositif.
La figure 2 est une vue schématique illustrant le principe du dispositif.

Le dispositif de maintien d'alimentation de l'invention, portant la référence générale (1) est constitué par un circuit électronique (2) logé avantageusement dans un boîtier (3).

Le circuit électronique (2) comprend une entrée électrique (4) avec ses connexions d'entrée (40, 40') raccordées à une batterie directement ou par l'intermédiaire d'accessoires tels que des interrupteurs ou des fusibles (non représentés), et une sortie électrique (5) avec ses connexions de sortie (50, 50') raccordée à un ou plusieurs équipement directement ou par l'intermédiaire d'accessoires tels que des interrupteurs ou des fusibles (non représentés).

Le principe de fonctionnement du dispositif de maintien d'alimentation, est caractérisé en ce que l'énergie disponible à la sortie (5) qui permet de maintenir une tension minimale aux équipements raccordés à sa sortie ne provient pas d'un accumulateur ou d'une pile.

Selon un mode d'exécution l'énergie disponible est produite à l'aide d'un élévateur de tension (6) à découpage ou similaire.

L'invention se caractérise par le fait qu'elle est destinée à maintenir une tension électrique minimale aux bornes d'un équipement et quelle peut assurer la protection contre les surtensions et autres phénomènes transitoires.

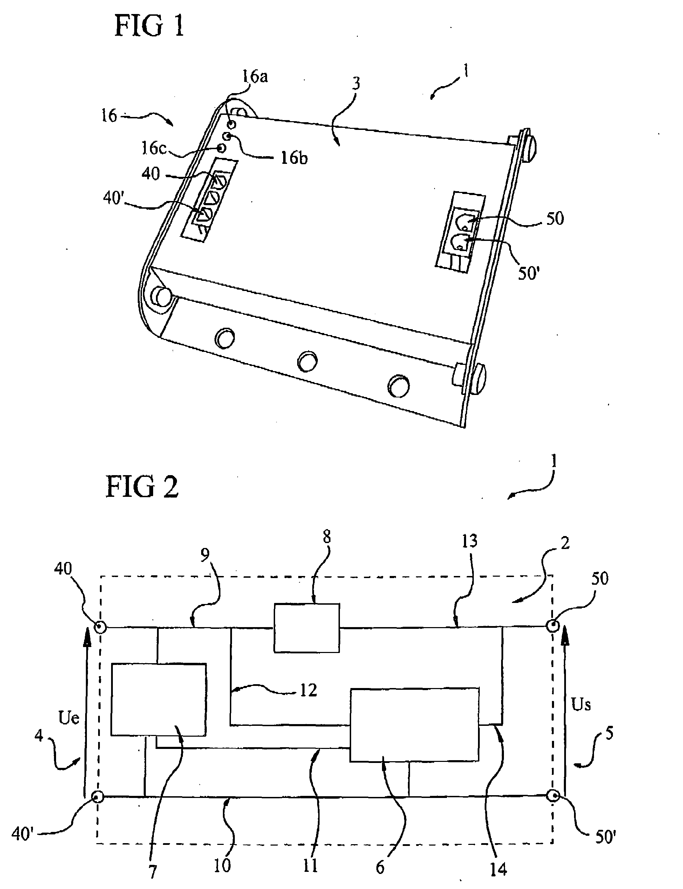

La figure 2 est une vue schématique d'un mode d'exécution d'un circuit électronique (2) donné à titre d'exemple.

Le circuit (2) comprend comme nous l'avons signalé précédemment une entrée électrique (4) et une sortie électrique (5).

II comprend par ailleurs une unité de surveillance de tension (7) un dispositif anti-retour (8) et un élévateur de tension (6).

L'unité de surveillance de tension (7) est disposée à l'entrée dus dispositif, entre le circuit d'entrée (9) et le circuit de masse (10). Cette unité (7) a pour rôle de mesurer en permanence la tension à l'entrée du dispositif et de la comparer à un seuil (S), ce dernier étant soit fixe, soit réglable en usine ou, dans le cas d'une variante, réglable par l'utilisateur.

L'unité de surveillance de tension (7) se caractérise par le fait qu'elle consomme très peu d'énergie et qu'elle peut activer le fonctionnement de l'élévateur de tension (6) quand elle détecte que la tension d'entrée (Ue) est inférieure au seuil. A cet effet l'unité de surveillance (7) est reliée à l'élévateur de tension (6) grâce à une liaison de commande (11). La valeur du seuil (S) correspond à la valeur de la tension minimum permettant le fonctionnement des équipements.

A cet effet, l'élévateur de tension (6) pour son alimentation, est connecté au circuit d'entrée (9) par une liaison filaire amont (12) en amont du dispositif anti-retour (8), tandis qu'il est relié au circuit de sortie (13) en aval du dispositif anti-retour (8), par une liaison filaire avale (14). Par ailleurs il est aussi relié à l'unité de surveillance (7) par la liaison de commande (11) ainsi qu'au circuit de masse (10).

L'élévateur de tension (6) permet, quand il est activé, d'élever la tension du circuit de sortie (13) par rapport au circuit d'entrée (9) L'augmentation de tension est obtenue par un convertisseur à haute fréquence ou tout autre dispositif similaire.

L'élévateur de tension (6) n'est pas activé tant que la tension du circuit d'entrée (9) est supérieure au seuil. Le seuil variable est déterminée pour permettre de fournir en permanence une tension minimum aux équipements raccordés à la sortie (Us) de l'invention

Le dispositif anti-retour (8) est disposé entre la connexion d'entrée (40) et la connexion de sortie (50), ce qui permet d'éviter que la tension et le courant fourni par l'élévateur de tension (6), quand il est activé par l'unité de surveillance (7) retourne vers la source d'énergie branchée à l'entrée (Ue) du dispositif. Il permet donc d'isoler le circuit de sortie (13) du circuit d'entrée (9) quand le convertisseur est en fonction, c'est-à-dire quand la tension d'entrée (Ue) est inférieure à la tension de sortie (US), tension minimum d'alimentation des équipements permettant leur fonctionnement..

Inversement, quand la tension d'entrée (Ue) est supérieure au seuil (S), c'est-à-dire, quand l'élévateur de tension n'est pas en service, le dispositif anti-retour (8) conduit et laisse passer le courant électrique en provenance de la source d'entrée (Ue). Dans ce cas, la tension du circuit d'entrée (9) et du circuit de sortie (13) sont similaire ou légèrement différente en fonction de la chute de tension éventuelle du dispositif anti-retour (8) par exemple, si celui-ci, dans un exemple non imitatif, est une diode.

Selon une variante de réalisation le dispositif de maintien d'alimentation et plus précisément son circuit électronique pourrait ne pas contenir pas d'unité de surveillance de tension. Dans ce cas, l'élévateur de tension (6) serait constamment actif. L'inconvénient de cette variante tient au fait que la consommation électrique de l'invention sera plus importante, surtout quand il n'est pas nécessaire de surélever la tension d'entrée.

Il va de soi que le dispositif (1) peut avoir un indicateur d'état de fonctionnement propre, comme par exemple indicateur d'état du réseau électrique d'entrée (16) avec par exemple un voyant d'indication de surcharge (16a) un voyant d'indication de déclenchement de sauvegarde (16b) et un voyant d'indication d'inversion de polarité (16c). Ces voyants permettant à l'utilisateur de vérifier que le raccordement est correct et de lui signaler chaque activation de la sauvegarde.

De ce qui précède on a compris que le dispositif (1) donné à titre d'exemple, faisait référence à deux paramètres, qui peuvent varier selon son usage, et sa configuration. Bien entendu le dispositif, pourrait faire référence à un seul paramètre, voir plus de deux paramètres en fonction des applications auquel il est destiné.

Comme nous l'avons vu précédemment l'un des paramètres est la valeur du seuil de comparaison (S) de l'unité de surveillance (7). Ce seuil correspond à la valeur de la tension du circuit d'entrée qui permet soit d'activer l'élévateur de tension (6), soit de désactiver ce rehausseur de tension. La valeur de ce seuil prend en compte les chutes de tension éventuelles entre le circuit d'entrée (Ue) et le circuit de sortie (Us). La valeur de ce seuil prend aussi en compte le temps de transition de fonctionnement pour garantir une tension minimum garantie sur le circuit de sortie Us.

Selon une variante d'exécution possible, Dans une variante, ce seuil pourrait être décomposé en deux seuils pour permettre une activation dite « hystérésis » de l'élévateur de tension (6) et éviter de l'éventuelle oscillation de la commande d'activation, à savoir,
- Un seuil pour activer le rehausseur de tension
- Un seuil pour désactiver le rehausseur de tension

Le deuxième paramètre, est la valeur tension minimum garantie sur le circuit de sortie, en aval de l'élévateur de tension. Cette valeur de tension minimum garantie peut être variable en fonction de la tension du courant électrique nécessaire pour le fonctionnement des équipements électriques qui y sont raccordés.

De ce qui précède on a compris que l'unité de surveillance (7) raccordée au circuit d'entrée (9) compare en permanence la tension d'entrée (Ue) au « seuil de tension (S)» préprogrammé dans cette unité. La valeur de ce seuil est déterminée pour que la tension du circuit de sortie (Us) soit toujours supérieure à la tension minimum garantie sur le circuit de sortie de l'invention.

Ainsi :
a- Quand la tension d'entrée (Ue) devient ou est supérieure au « seuil » :
   - l'élévateur de tension (6) n'est pas alimenté et donc ne consomme que très peu d'énergie, voir aucune énergie,
   - le courant électrique passe directement à travers le « dispositif anti-retour » pour se retrouver en sortie de l'invention (Us).
b- Quand la tension d'entrée (Ue) devient ou est inférieure au « seuil » :
   - l'élévateur de tension (6) est alimenté et actif,
   - le « dispositif anti-retour (8) » permet :
      1- à la tension électrique du circuit de sortie, en aval de l'élévateur, de devenir supérieur à la tension électrique du circuit d'entrée situé en amont.
      2- Au courant fournit par le rehausseur de tension de ne pas retourner sur le circuit d'entrée et le générateur qui y est raccordé.

## Revendications

1. Dispositif de maintien d'alimentation (1) destiné à maintenir alimentés des équipements qui sont branchés sur un réseau électrique d'alimentation en courant continu, sur lequel est aussi raccordé d'autres équipements électriques tels que des démarreurs de moteurs thermiques ou tout autre consommateur mettant en oeuvre de forts courants électriques et générant des chutes de tension importante, ledit dispositif comprenant un circuit électronique (2), **caractérisé en ce que** le circuit électronique comprend au moins une unité de surveillance de tension (7), un élévateur de tension (6), et un dispositif anti-retour (8), ledit dispositif comprenant une entrée électrique (4) et une sortie électrique (5), tandis que l'unité de surveillance de tension (7) est disposé à l'entrée du dispositif entre le circuit de masse (10) et le circuit d'entrée (9), et est reliée à l'élévateur de tension (6) grâce à une liaison de commande (11), et **en ce que** l'élévateur de tension (6) est connecté au circuit d'entrée (9) par une liaison filaire amont (12) en amont du dispositif anti-retour (8), et est par ailleurs relié au circuit de sortie (13) en aval du dispositif anti-retour (8), par une liaison filaire avale (14).

2. Dispositif (1) selon la revendication 1, **caractérisé en ce que** le circuit l'entrée électrique (4) comprend deux connexions d'entrée (40, 40') destinées à être raccordées sur un réseau électrique, et la sortie électrique (5) comprend deux connexions de sortie (50, 50') destinées à être raccordée à un ou plusieurs équipement(s) électrique(s).

3. Dispositif (1) selon la revendication 1 ou 2, **caractérisé en ce que** le l'unité de surveillance (7) a pour rôle de mesurer en permanence la tension à l'entrée du dispositif (Ue) et de la comparer à un seuil (S).

4. Dispositif (1) selon la revendication précédente, **caractérisé en ce que** le seuil (S) correspond à la valeur de la tension minimum permettant le fonctionnement des équipements.

5. Dispositif (1) selon l'une quelconque des revendications précédentes, **caractérisé en ce que** l'élévateur de tension (6) est un convertisseur à hautes fréquences.

6. Dispositif (1) selon l'une quelconque des revendications précédente, **caractérisé en ce en ce qu**'il comprend un indicateur d'état de fonctionnement (16).

7. Dispositif (1) selon la revendication précédente, **caractérisé en ce** l'indicateur d'état du réseau électrique d'entrée (16) comprend un voyant d'indication de surcharge (16a) un voyant d'indication de déclenchement de sauvegarde (16b) et un voyant d'indication d'inversion de polarité (16c).

8. Dispositif (1) selon l'une quelconques des revendications précédentes, **caractérisé en ce que** le circuit électronique (2) est logé dans un boîtier (2)
